# EUROPÄISCHE PATENTSCHRIFT

(11) **EP 2 603 440 B1**
(45) Veröffentlichungstag und Bekanntmachung des Hinweises auf die Patenterteilung: **16.04.2014**
(21) Anmeldenummer: 10787288.9
(22) Anmeldetag: 24.11.2010
(51) Int. Cl.: B65D 43/02

(54) **TRANSPORTEIMER MIT DECKELVERSCHLUSS, INSBESONDERE ZUR DICHTEN AUFNAHME VON FLIEßFÄHIGEM UND/ODER PASTÖSEN MEDIEN**
TRANSPORTING BUCKET WITH LID CLOSURE, IN PARTICULAR FOR SEALINGLY ACCOMMODATING FLOWABLE AND/OR PASTY MEDIA
SEAU DE TRANSPORT MUNI D'UNE FERMETURE À COUVERCLE, EN PARTICULIER POUR LA RÉCEPTION ÉTANCHE DE MILIEUX FLUIDES ET/OU PÂTEUX

(30) Priorität: 13.08.2010 DE 202010011347 U
(43) Veröffentlichungstag der Anmeldung: 19.06.2013
(73) Patentinhaber: Schoeller Arca Systems GmbH, 19057 Schwerin (DE)
(72) Erfinder: SELMANI, Tefik, CH-1018 Lausanne (CH); HUIZINGH, Jan, Abraham, NL-9541 AH Vlagtwedde (NL); DELISLE, Philippe, CH-1464 Chavannes-Ie-Chêne (CH)
(74) Vertreter: Bockhorni, Josef
(86) Internationale Anmeldenummer: PCT/EP2010/007139
(87) Internationale Veröffentlichungsnummer: WO 2012/019635

(56) Entgegenhaltungen:
- EP-A2- 0 144 197
- EP-A2- 0 200 395
- EP-A2- 1 728 648
- DE-A1- 4 236 052
- US-B1- 6 296 726

## Beschreibung

Die Erfindung betrifft einen Transporteimer mit Deckelverschluss (siehe EP 1728648) gemäß dem Oberbegriff des Anspruchs 1.

Derartige Eimer mit Deckelverschluss und einer Befestigung des Deckels auf dem Eimer durch Rotationsschweißen sind bereits bekannt (vgl. US 6,296,726 B1). Hierbei übergreift der Deckel mit einer umlaufenden Nut den Eimerrand. Durch einen Rotationsantrieb erfolgt eine Relativdrehung zwischen Deckel und Eimer. Nach Erreichen einer vorbestimmten relativen Umlaufdrehzahl erfolgt nach Ausschalten des Rotationsantriebs eine Reibverschweißung in Folge Aufschmelzen der Kontaktflächen zwischen Deckel und Eimer und damit ein dichter Verbund zwischen Deckel und Eimer. Derartige durch Rotationsschweißen durch einen Deckel verschlossene Eimer bedürfen für die dichte Verbindung keines gesonderten Dichtrings und können alleine aufgrund der ringsumlaufenden Verschweißung absolut dicht ausgelegt werden. Derartige Eimer mit Deckelverschluss eignen sich deswegen insbesondere für den Einsatz in der chemischen Industrie und generell zum Transport von hochwertigen und/oder gefährlichen Gütern. In Folge dieses Schweißverbunds ist es in der Regel auch sehr einfach möglich, eine entsprechende Gefahrgutzulassung für den Eimer zu erhalten. Üblicherweise liegen derartige Eimer mit einem Volumen von etwa 1 Liter bis 30 Liter vor, also in Größen, die ein manuelles Tragen des Eimers auch nach Einfüllen des zu transportierenden Mediums ermöglichen. Häufig werden derartige Eimer nach dem Verschließen über ein Garantieband gesichert, so dass von außen her sofort feststellbar ist, ob der Eimer bereits geöffnet wurde. Üblicherweise sind derartige Garantiebänder über Abreißbänder mit dem Deckel verbunden. Bei dem in der US 6,296,726 B1 beschriebenen Behälter ist allerdings ein Garantieband nicht vorgesehen. Ferner lässt sich der Deckel vom Eimer nur nach Zerstörung der Schweißverbindung lösen, was in vielen Fällen aber als nachteilhaft empfunden wird, insbesondere wenn auch ein Zweitverschluss durch Rasteingriff zwischen Deckel und Eimer gewährleistet sein soll. Ferner müssen sowohl Deckel wie auch Eimer auch für die Reibschweißverbindung ausgebildet werden.

Aufgabe der Erfindung ist es, einen Eimer mit Deckelverschluss zu schaffen, welcher besonders gut für einen dichten Verbund durch Rotationsschweißen ausgelegt ist und eine sichere dichte Verbindung zwischen Deckel und Eimer ohne den Zwang weiterer zusätzlicher Dichtmaßnahmen gewährleistet. Auch der Verbindungsvorgang soll vergleichsweise einfach von statten gehen. Ferner soll ein vergleichsweise einfaches Öffnen möglich sein.

Diese Aufgabe wird erfindungsgemäß durch die im kennzeichnenden Teil des Anspruchs 1 enthaltenen Maßnahmen gelöst, wobei zweckmäßige Weiterbildungen der Erfindung durch die in den Unteransprüchen enthaltenen Merkmale gekennzeichnet sind.

Die Erfindung zeichnet sich maßgeblich durch ein Klemmteil aus, welches den Verbund durch Reibschweißung zwischen Deckel einerseits und Eimer andererseits bewerkstelligt. Alleine das Klemmteil muss deswegen für die Reibschweißverbindung ausgelegt werden. Das Klemmteil liegt hierbei als Klemmring vor und zwar zweckmäßiger Weise als ein umlaufend ausgebildeter Ring, so dass nach der Verschweißung zwischen Deckel und Eimer über den Klemmring für einen dichten Verbund kein zusätzlicher Dichtring erforderlich ist. Der Klemmring muss lediglich in einfacher Weise auf eine deckelseitig oder eimerseitige Aufnahme aufgesetzt oder eingelegt werden, der Gestalt, dass die für das Reibschweißen erforderliche Kontaktflächen zwischen Eimer und Klemmring einerseits und Deckel und Klemmring andererseits bereit gestellt sind. Durch Relativverdrehung der Bauteile, insbesondere durch Rotation des Klemmrings, kann dann das Reibschweißen bewerkstelligt werden. D. h., es ist lediglich ein vergleichsweise klein dimensionierter Ring für den Reibschweißvorgang erforderlich, der zwischen Deckel einerseits und Eimer andererseits angeordnet ist. Folglich muss auch für das Öffnen der Reibschweißverbindung lediglich der Klemmring gelöst werden.

Zweckmäßiger Weise ist der Klemmring in eine Nut zwischen Deckel und Eimer eingesetzt und zwar vorzugsweise eingedrückt, so dass der Klemmring sich bereits in Kontakt mit Deckel und Eimer für das Rotationsschweißen befindet. Zweckmäßiger Weise ist am Klemmteil des Klemmrings eine Anschlagschulter vorgesehen, so dass in einfacher Weise der Klemmring in die Nut bis auf Anschlag eingesetzt werden kann, was für eine zuverlässige Dichtung des Verschlusses bei schnellem maschinellem Reibschweißvorgang vorteilhaft ist.

In einer weiteren sehr zweckmäßigen Weiterbildung der Erfindung ist der Deckel an seinem Deckelrand mit einem durch ein Abreißband gesichertes Garantieband versehen, dessen unterer Rand mit dem Eimer die Einstecknut für den Klemmring bildet. Dadurch ist sozusagen das Garantieband des Deckels mit dem Eimer über den Klemmring durch Verschweißen verbunden, was ein einfaches Öffnen des Deckelverschlusses durch Abziehen des Reißbandes ermöglicht ohne das die Reibschweißverbindung zerstört werden muss. Wenn zugleich zwischen Deckel und Eimer eine Rastverbindung vorgesehen ist, lässt sich der Deckel zur Bildung eines Zweitverschlusses ohne Weiters auf den Eimer aufrasten.

In einer alternativen Ausführungsform ist der Klemmring auf den Eimerrand aufsteckbar bzw. aufsetzbar und liegt hierbei zweckmäßigerweise auf dem Deckelrand auf, wobei der Deckel seinerseits auf einer Schulter des Eimers aufliegt. Auch hierdurch kann zwischen Klemmring und Deckel ein Reibverschluss durch Verschmelzen erreicht werden. Hierbei ist es aber insbesondere zweckmäßig, wenn der Klemmring auch mit dem Eimer durch Reibschweißen verbunden wird. Hierzu liegt der Klemmring wiederum auf einer Schulter, d. h. einer weiteren Schulter des Eimerrands auf oder an einer entsprechenden Kontaktfläche des Eimerrands. Besonders zweckmäßig ist es hierbei, wenn am Klemmring ein wiederum über ein Abreißband gesichertes Garantieband angeordnet, insbesondere angeformt ist. Der untere Rand des Garantiebands kann hierbei durch Reibschweißen mit dem Eimer fest verbunden werden. Dadurch kann der Deckel wiederum in einfacher Weise durch Abziehen des Abreißbandes geöffnet werden. Durch eine geeignete Rastschnappverbindung lässt sich der Deckel im Wege eines Zweitverschlusses nach Erstgebrauch wieder auf den Eimer aufsetzen.

Nach Maßgabe der Erfindung kann der Klemmring separat vom Deckel und Eimer hergestellt werden und zwar durch Spritzgießen aus Kunststoff ebenso wie der Deckel und der Eimer selbst, die wiederum aus Kunststoff hergestellt sind. Hierbei würde es für das Reibschweißen auch genügen, wenn nur der obere Eimerrand, der mit dem Deckel verbunden werden soll und im Prinzip auch nur der umlaufende Deckelrand aus Kunststoff ausgebildet ist. Zweckmäßiger Weise ist jedoch der Deckel, der Klemmring und der Eimer insgesamt aus Kunststoff hergestellt. Als Kunststoff eignen sich insbesondere thermoplastische Elastomere, insbesondere HDPE, also ein hochdichtes thermoplastisches Elastomer, LDPE, also ein niedrig dichtes thermoplastisches Elastomer oder Polyproylen. Bedarfsweise kann in dem Deckel auch ein Ring eingesetzt werden, insbesondere wenn auch für den Zweitverschluss ein dichter Verbund bewerkstellig werden soll. Allerdings erspart man sich mit dem Reibschweißverbund das gesonderte Einlegen eines Dichtringes, vielmehr wird die Dichtfunktion durch den eingeschweißten Klemmring übernommen, der als separates Teil zum Schweißprozess hinzugefügt wird. Der Klemm- bzw. Schweißring kann unterschiedlich konfiguriert sein, liegt aber zweckmäßigerweise als U-förmiges Profil, vorzugsweise mit einer Anschlagschulter vor. Die Anschlagschulter hat den Zweck, dass ein exaktes Aufsetzen bzw. Einsetzen des Ringes auf bzw. in die Aufnahme bewerkstelligt wird.

Die Erfindung eignet sich insbesondere für den Transport von Ölen, Lacken und Fetten, und zwar auch und vor allem für aggressive Medien, wie sie in der chemischen Industrie verwendet werden. In Folge der Reibschweißverbindung ist in einfacher Weise eine Gefahrgutzulassung möglich.

Für den Schweißverbund wird lediglich der Klemm- bzw. Schweißring geeignet in einer Aufnahme in Bezug auf den Eimer und Deckel fixiert und danach auf eine hohe Umlaufdrehzahl gebracht, so dass der Klemmring rotationsbedingt an die Kontaktflächen des Deckels bzw. des Eimers gedrückt wird. Schaltet man dann den Rotationsantrieb aus, dann erreicht man eine Verschweißung bei geeigneter Umlaufdrehzahl.

Nachfolgend werden Ausführungsbeispiele der Erfindung anhand der Zeichnungen beschrieben. Darin zeigen
- Fig. 1: exemplarisch einen Eimer mit Deckelverschluss
- Fig. 2: einen Teilschnitt durch eine erfindungsgemäße Ausführungsform eines Eimers mit Deckelverschluss, wobei der Deckel durch Reibschweißen mit dem Eimer verschweißbar ist,
- Fig. 3: einen Teilschnitt durch eine weitere Ausführungsform eines Eimers mit Drehverschlusse sowie

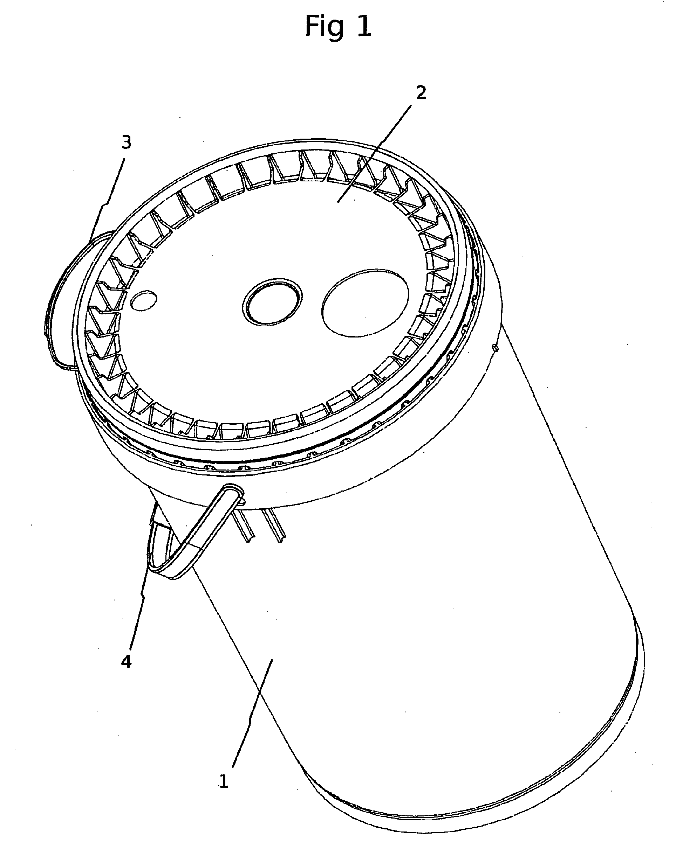

- Fig. 1: eine weitere Ausführungsform und zwar wiederum als Teilschnitt durch einen Eimer mit Deckelverschluss

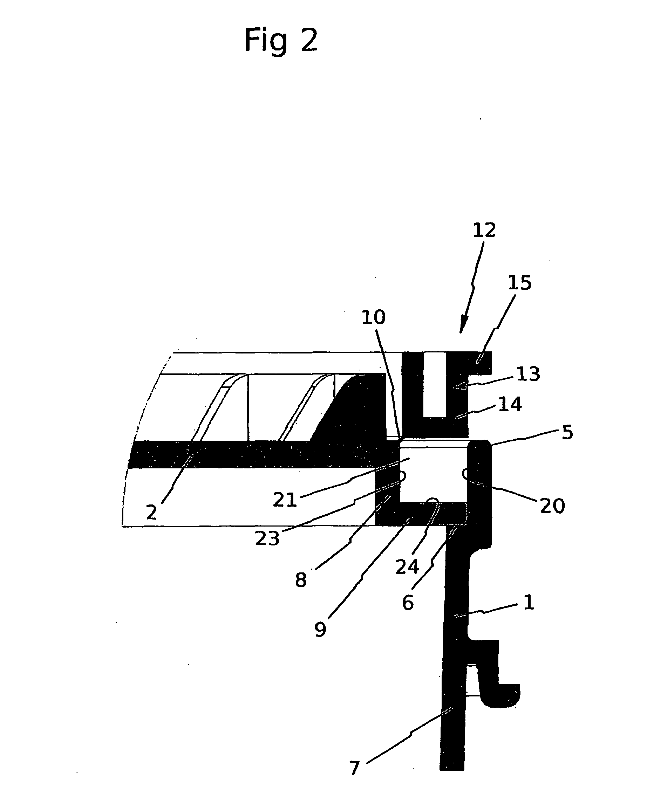

Figur 1 zeigt exemplarisch einen Eimer mit Deckelverschluss, der üblicherweise aus einem zylindrischen oder auch konisch sich von oben nach unten verjüngenden Eimer 1 mit einem darauf aufgesetzten Deckel 2 gebildet ist. Zum Zwecke des Abziehens des Deckels 2 vom Eimer 1 kann am Deckel ein Handgriff 3 angeformt sein. Zur Erleichterung des Tragens des Eimers kann am Eimer, insbesondere am oberen Eimerrand ein mit 4 bezeichneter Henkel vorgesehen sein. Im vorliegenden Fall geht es um eine Reibschweißverbindung zwischen Deckel 2 und Eimer 1, welche anhand der Ausführungsformen in den Figuren 2 bis 4 beschrieben wird.

In der Ausführungsform nach Figur 2, die einen Teilschnitt durch den oberen Rand des Eimers 1 darstellt, ist wiederum mit 2 der Deckel bezeichnet, der hier durchmessermäßig schmäler als der obere Eimerrand 5 ausgebildet ist und auf einer Schulter 6 aufsitzt, die dadurch gebildet ist, dass der obere Eimerrand 5 radial nach außen gegenüber der unteren Wand 7 des Eimers versetzt ist.

Der Deckel 2 ist an seinem äußeren umlaufenden Deckelrand mit einer sich nach unten erstreckenden L-förmigen Schulter 8 versehen, deren radialer Schenkel 9 ersichtlich auf der Schulter 6 des Eimers 1 aufliegt.

Am Deckel 2 ist hier durch ein abreißbares dünnes Filmscharnier 10 ein Klemmring 12 einstückig angeformt, wodurch der Klemmring 12 in einer Form mit dem Deckel 2 aus Kunststoff spritzgegossen werden kann. Im dargestellten Ausführungsbeispiel ist der Klemmring 12, der im Übrigen um den oberen Tellerrand 5 umlaufend kreisringförmig ausgebildet ist, aus einem Klemmteil 13 mit U-Profil und einer am äußeren Klemmteilschenkel 14 radial nach außen abstehenden Anschlagschulter 15 versehen.

Wie aus Figur 2 sehr deutlich hervorgeht, begrenzt der Deckel 2 mit seiner L-förmigen Schulter und der mit 20 bezeichneten Innenseite des oberen Eimerrands 5 eine mit 21 bezeichnete, nach oben hin offene Nut. In diese ist der Klemmring 13 eindrückbar, wobei jedoch nach dem Eindrücken des Klemmrings 13 in die Nut 21 noch eine Relativdrehung von Deckel und Eimer bezüglich des Klemmrings 13 möglich ist.

Nach dem Eindrücken des Klemmrings 13 erfolgt die Reibverschweißung durch Rotationsschweißen. Dies erfolgt dadurch, dass der Deckel 2, der Eimer 1 oder der Klemmring 13 in Rotation versetzt wird und zwar relativ zu den anderen Bauteilen. Sobald eine bestimmte und für die Reibverschweißung geeignete Drehzahl des rotierenden Teils, etwa des Klemmrings, erreicht wird, wird der Rotationsantrieb abgeschaltet und es kommt in Folge Schmelzung anliegender Teile zu einer Reibverschweißung zwischen einerseits Klemmring 13 und Deckel 2 und andererseits Klemmring 13 und Eimer 1. Im Ausführungsbeispiel nach Figur 2 stellen sowohl die Innenfläche 23 der L-förmigen Schulter 8 des Deckels 2, der Boden 24 des radial nach außen vorstehenden Schenkels 9 der Schulter 8 sowie die Innenfläche 20 die Verschweißungszone dar, über die der Deckel 2 und Eimer 1 mit dem eingedrückten bzw. eingesetzten Klemmring 13 durch Reibschweißen schließlich verbunden sind.

Dadurch wird eine sehr dichte Verbindung zwischen Deckel und Eimer über den gesamten Umfang erreicht, die ein Austreten des fließfähigen oder pastösen Mediums verhindert. In der Ausführungsform nach Figur 2 kann diese dichte Verbindung nur durch Zerstören der Reibschlussverbindung geöffnet werden, was aber in vielen Anwendungsfällen voll genügt.

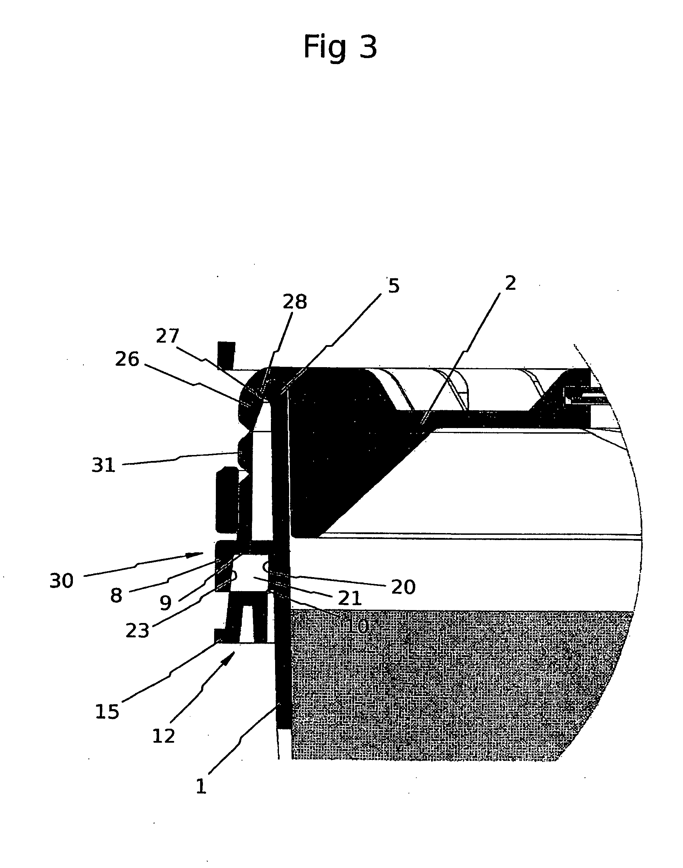

Bei der Ausführungsform nach Figur 3 werden für dieselben Bauteile dieselben Bezugszeichen verwendet. Der Deckel 2 sitzt hierbei auf dem oberen Eimerrand 5 auf, wobei der Deckel 2 mit einer umlaufenden Nase 26 mit einer Rastausnehmung 27 den oberen Eimerrand 5 übergreift. Dieser obere Eimerrand 5 ist bei 28 mit einer nach außen vorstehenden Nase versehen, die über den Umfang des Eimers umlaufend oder abschnittsweise vorgesehen sein kann. Nach Aufsetzen des Deckels 2 auf den Eimer 1 rastet die Nase 28 in die Ausnehmung 27 des Deckels 2 ein, so dass eine Rastverbindung erreicht wird.

An der Nase 26 des Deckels 2 schließt sich ein deckelseitig angeformtes Garantieband 30 an, welches über ein Abreißband 31 mit der Nase 26 verbunden ist.

Am unteren Rand des Garantiebands 30 ist die L-förmige Schulter 8 ausgebildet, die einen radial nach innen reichenden Flansch 9 aufweist. Die Innenfläche 23 der L-förmigen Schulter und der Flansch 9 begrenzen mit der Innenfläche 20 des Tellers 1 wiederum eine Nut 21 zur Aufnahme eines nunmehr am Eimer 1 über wiederum ein Filmscharnier 10 angeformten Klemmrings 12, der ähnlich wie der Klemmring nach Figur 2 ausgebildet ist. Bedarfsweise kann das Klemmteil des Klemmrings zur besseren Einführung konisch ausgelegt sein. Dieser Klemmring 12 kann wiederum für das Rotationsschweißen in die Nut 21 eingedrückt werden und liegt dann mit seiner radial sich nach außen erstreckenden Anschlagschulter 15 am unteren Rand des Garantiebands an. Auch hier erfolgt wiederum die Schweißverbindung durch Rotationsschweißen bzgl. Deckel 2, nämlich den unteren Bereich des Garantiebands und dem Klemmring einerseits und dem Klemmring und dem Eimer 1 andererseits. Sowohl die Seitenwände wie auch der Boden der Nut 21 verschweißen hierbei mit dem eingedrückten Klemmring 12. Dadurch wird wiederum eine sehr feste und dichte dauerhafte Verbindung zwischen Deckel und Eimer erreicht.

Durch Abreißen des Abreißbandes 31 kann der Deckel ohne weiteres gegenüber der Schweißverbindung freigesetzt und nach Lösen der Rastverbindung abgenommen werden. Die Ausführungsform nach Figur 3 kann auch für einen Zweitverschluss verwendet werden, der dann durch die Verrastung zwischen der Nase 28 des Eimers 1 und der Nase 26 der Ausnehmung 27 des Deckels 2 gebildet wird. D.h., bei der Ausführungsform nach Figur 3 kann der Eimer 1 geöffnet werden, ohne dass es erforderlich ist, die Reibschweißverbindung zu zerstören bzw. aufzumachen.

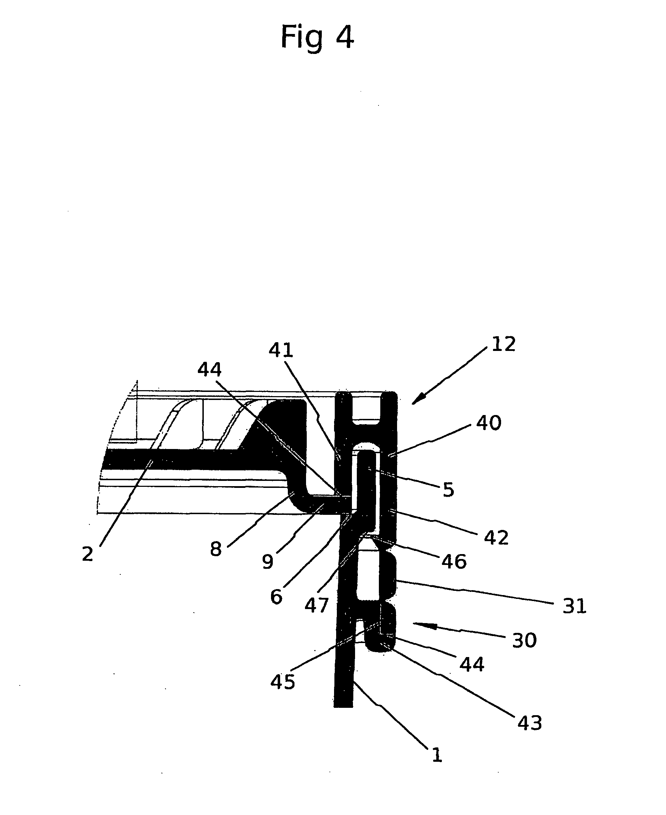

Ähnliches gilt für die Ausführungsform nach Figur 4, bei der wiederum die gleichen Bezugszeichen für die gleichen Bezugsteile verwendet worden sind. In dieser Ausführungsform sitzt der Deckel 2 mit seiner L-förmigen Schulter 8 wiederum auf einer Schulter 6 des Eimers 1 im Bereich des Eimerrands 5 auf. Allerdings ist nunmehr der Klemmring 12 von oben auf den Eimerrand 5 aufgesetzt, wobei hierzu der Klemmring 12 mit einem UProfil 40 ausgebildet ist, dessen beide Schenkel zwischen sich eine Nut bilden, in die der Eimerrand 5 eintaucht. Der innen liegende Schenkel 41 des Klemmrings 12 liegt hierbei auf dem Flansch 9 der Schulter 8 des Deckels 2 auf. Bedarfsweise kann ein Spalt dazwischen vorgesehen sein. Ferner ist der Klemmring 12 an seinem äußeren Schenkel 42 mit einem Garantieband 30 versehen, welches wiederum über ein Abreißband 31 befestigt ist, hier allerdings am Schenkel 42 des Klemmrings 12.

Der untere Rand des Garantiebands 30 liegt in der Ausführungsform nach Figur 4 auf einer L-förmigen Schulter 43 am Eimer 1 auf und zwar an den Kontaktflächen 44 und 45 der Schulter 43.

Durch Rotationsschweißen erhält man wiederum einen Reibschluss 44 und zwar einerseits bezüglich des nach unten vorstehenden Schenkels 41 des Klemmrings 12 mit der Oberfläche des radialen Flansches 9 der Schulter 8 des Deckels 2 und andererseits zwischen dem Garantieband 30 am Klemmring 12 und den beiden Kontaktflächen 44 und 45 der L-förmigen Schulter 43.

Auch hier kann der Deckel ohne Zerstörung der Reibschweißverbindung geöffnet werden, nämlich durch einfaches Abziehen des Abreißbandes 31, so dass der Deckel 2 mit dem daran durch Reibschweißung verbundenen Klemmring 12 vom Eimer 1 abgehoben werden kann. Auch hier ist wiederum ein Zweitverschluss möglich und zwar durch den am unteren Ende des Schenkel 42 des Klemmrings 12 ausgebildeten Rasthaken 46, der mit einer nach außen vorstehenden Schulter 47 des Eimerrands 5 zusammenwirkt, so dass für den Zweitverschluss der Deckel 2 mit dem daran durch Reibschweißverbund verbundenen Klemmring 12 mit dem Eimer 1 verrastbar ist.

## Patentansprüche

1. Transporteimer mit Deckelverschluss, insbesondere zur dichten Aufnahme von fließfähigen und/oder pastösen Medien, mit einem Eimer (1) und einem auf den Eimer aufsetzbaren und durch Rotationsschweißung mit dem Eimer dicht verschweißbaren Deckel (2),
**dadurch gekennzeichnet, dass**
zwischen dem oberen Rand (5) des Eimers (1) und dem Rand des aufgesetzten Deckels (2) eine Aufnahme für einen Klemmring (12) gebildet ist, der nach Anordnung in oder auf der Aufnahme einerseits mit dem Deckel (2) und/oder andererseits mit dem Eimer (1) durch Rotationsschweißen zur Bildung eines dichten Verbunds verschweißbar ist.

2. Eimer nach Anspruch 1,
**dadurch gekennzeichnet, dass**
die Klemmringaufnahme durch eine Nut (21) gebildet ist, die zwischen Deckelrand und Eimerrand ausgebildet ist, in welche der Klemmring (12) einsetzbar, insbesondere eindrückbar ist.

3. Eimer nach Anspruch 2,
**dadurch gekennzeichnet, dass**
der Klemmring (12) einen im Wesentlichen U-förmigen Klemmteil (13) aufweist.

4. Eimer nach Anspruch 3,
**dadurch gekennzeichnet, dass**
der Klemmteil (13) mindestens an einem seiner U-Schenkel eine Anschlagschulter (15) aufweist, die vorzugsweise radial nach außen vorsteht, über die der in die Nut (21) eingesetzte Klemmring (12) am Eimerrand oder am Deckelrand anliegt.

5. Eimer nach einem der vorhergehenden Ansprüche,
**dadurch gekennzeichnet, dass**
der Deckel (2) am Deckelrand mit einem durch ein Abreißband (31) gesicherten Garantieband (30) versehen ist, dessen unterer Rand mit dem Eimer (1) die Nut (21) für die Aufnahme des Klemmrings (12) ausbildet.

6. Eimer nach Anspruch 1,
**dadurch gekennzeichnet, dass**
die Aufnahme des Klemmrings (12) durch mindestens eine Schulter (6) am Eimerrand (5) gebildet ist, auf welcher der Deckel (2) und das Klemmteil (12) für die Rotationsverschweißung aufsitzen, so dass das Klemmteil mit Deckel und Eimerrand verschweißbar ist.

7. Eimer nach Anspruch 6,
**dadurch gekennzeichnet, dass**
die Aufnahme durch zwei Schultern (6) und (43) am Eimerrand gebildet ist, von denen die erste Schulter (6) auf der Innenseite des Eimerrands (5) ausgebildet ist, auf der der aufgesetzte Deckel (2) aufliegt und darauf der Klemmring angeordnet ist, und von denen die zweite Schulter (43) auf der Außenseite des Eimerrands (5) ausgebildet ist, auf der der Klemmring (12) aufsitzt.

8. Eimer nach Anspruch 7,
**dadurch gekennzeichnet, dass**
der Klemmring (12) mit einem durch ein Abreißband (31) gesichertes Garantieband (3) versehen ist, welches mit seinem unteren Ende mit der zweiten Schulter (43) am Eimerrand über Kontaktflächen (44, 45) verschweißbar ist.

9. Eimer nach einem der vorhergehenden Ansprüche,
**dadurch gekennzeichnet, dass**
der Deckel (2) mit dem Eimerrand (5) verrastbar ist.

10. Eimer nach einem der vorhergehenden Ansprüche,
**dadurch gekennzeichnet, dass**
der Klemmring (12) als separates Bauteil ausgebildet ist.

11. Eimer nach einem der vorhergehenden Ansprüche,
**dadurch gekennzeichnet, dass**
der Klemmring (12) durch eine Abreißverbindung (10), insbesondere ein Filmscharnier, einstückig am Deckel (2) oder Eimer (1) angeformt ist.

12. Eimer nach einem der vorhergehenden Ansprüche,
**dadurch gekennzeichnet, dass**
der Klemmring (12) ein durchgehend umlaufend ausgebildeter Ring ist.

## Claims

1. A transport bucket with a closure lid, in particular for receiving flow capable and/or pasteous media in a tight manner, comprising a bucket (1) and a lid (2) configured to be placed on the bucket and configured to be welded to the bucket in a tight manner through friction welding,
**characterized by the fact that**
a receiver for a clamping ring (12) is configured between the upper edge (5) of the bucket (1) and the edge of the applied lid (2), wherein the clamping ring after being disposed in the receiver or on the receiver is configured to be welded on one side to the lid (2) and/or on another side to the bucket (1) through rotation welding in order to form a tight interconnection.

2. The bucket according to claim 1,
**characterized by the fact that**
the clamping ring receiver is formed by a groove (21) which is configured between the lid edge and the bucket edge, into which groove the clamping ring (12) is insertable, in particular insertable under pressure.

3. The bucket according to claim 2,
**characterized by the fact that**
the clamping ring (12) includes an essentially U-shaped clamping component (13).

4. The bucket according to claim 3,
**characterized by the fact that**
the clamping component (13) includes a contact shoulder (15), at least at one of its U-shaped arms, wherein the contact shoulder protrudes preferably in a radially outward direction, wherein the clamping ring (12) inserted into the groove (21) contacts the bucket edge or the lid edge through the contact shoulder (15).

5. Bucket according to one of the preceding claims,
**characterized by the fact that**
the lid (2) is provided at the lid edge with a warranty tape (30) secured by a tear-off tape (31), wherein the lower edge of the warranty tape (30) and the bucket (1) form the groove (21) for receiving the clamping ring (12).

6. The bucket according to claim 1,
**characterized by the fact that**
the receiver of the clamping ring (12) is formed by at least one shoulder (6) at the bucket edge (5), wherein the lid (2) and the clamping component (12) for the rotation weld contact the shoulder, so that the clamping component is weldable together with the lid and the bucket edge.

7. The bucket according to claim 6,
**characterized by the fact that**
the receiver is formed by two shoulders (6) and (43) at the bucket edge, wherein the first shoulder (6) is configured on the inside of the bucket edge (5), wherein the applied lid (2) contacts the shoulder, and the clamping ring is disposed on the first shoulder, and wherein the second shoulder (43) is configured on the outside of the bucket edge (5), wherein the clamping ring (12) contacts the second shoulder.

8. The bucket according to claim 7,
**characterized by the fact that**
the clamping ring (12) is provided with a warranty tape (3) secured with a tear-off tape (3), wherein the warranty tape is configured to be welded together with its lower end with the second shoulder (43) at the bucket edge through contact surfaces (44, 45).

9. The bucket according to one of the preceding claims,
**characterized by the fact that**
the lid (2) is configured to be interlocked with the bucket edge (5).

10. The bucket according to one of the preceding claims,
**characterized by the fact that**
the clamping ring (12) is configured as a separate component.

11. The bucket according to one of the preceding claims,
**characterized by the fact that**
the clamping ring (12) is integrally formed at the lid (2) or the bucket (1) through a tear-off connection (10), in particular a film hinge.

12. The bucket according to one of the preceding claims,
**characterized by the fact that**
the clamping ring (12) is a continuous circumferential ring.

## Revendications

1. Seau de transport doté d'une fermeture par couvercle, destiné notamment à recevoir de façon étanche des fluides coulants ou pâteux, ledit seau de transport comportant un seau (1) et un couvercle (2) qui peut être placé sur le seau et être soudé de façon étanche au seau par soudage par rotation,
**caractérisé en ce que**
entre le bord supérieur (5) du seau (1) et le bord du couvercle (2) mis en place est formé un logement destiné à une bague de serrage (12) qui, après mise en place dans ou sur le logement, peut être soudée par soudage par rotation au couvercle (2) d'une part et/ou au seau (1) d' autre part afin de former une liaison étanche.

2. Seau selon la revendication 1, **caractérisé en ce que** le logement destiné à la bague de serrage est formé par une gorge (21) qui est ménagée entre le bord du couvercle et le bord du seau et dans laquelle la bague de serrage (12) peut être insérée, notamment enfoncée.

3. Seau selon la revendication 2, **caractérisé en ce que** la bague de serrage (12) comporte une partie de serrage (13) sensiblement en forme de U.

4. Seau selon la revendication 3, **caractérisé en ce que** la partie de serrage (13) comporte au moins sur une de ses branches de U un épaulement de butée (15) qui fait saillie de préférence radialement vers l'extérieur et par le biais de la laquelle la bague de serrage (12) insérée dans la gorge (21) porte contre le bord du seau ou le bord du couvercle.

5. Seau selon l'une des revendications précédentes, **caractérisé en ce que** le couvercle (2) est doté, au niveau du bord du couvercle, d'une bande de garantie (30) qui est sécurisée par une bande de rupture (31) et dont le bord inférieur forme avec le seau (1) la gorge (21) destinée à recevoir la bague de serrage (12).

6. Seau selon la revendication 1, **caractérisé en ce que** le logement de la bague de serrage (12) est formé au niveau du bord (5) du seau par au moins un épaulement (6) sur lequel sont placés le couvercle (2) et la partie de serrage (12) en vue du soudage par rotation de sorte que la partie de serrage peut être soudée au couvercle et au bord du seau.

7. Seau selon la revendication 6, **caractérisé en ce que** le logement est formé, au niveau du bord du seau, par deux épaulements (6) et (43) dont le premier épaulement (6) est formé du côté intérieur du bord (5) du seau, sur lequel porte le couvercle (2) mis en place, la bague de serrage étant disposé dessus, et dont le deuxième épaulement (43) est conformé du côté extérieur du bord (5) du seau, sur lequel porte la bague de serrage (12).

8. Seau selon la revendication 7, **caractérisé en ce que** la bague de serrage (12) est dotée d'une bande de garantie (3) qui est sécurisée par une bande de rupture (31) et qui peut être soudée par son extrémité inférieure au deuxième épaulement (43) au niveau du bord du seau par le biais de surfaces de contact (44, 45).

9. Seau selon l'une des revendications précédentes, **caractérisé en ce que** le couvercle (2) peut être encliqueté au bord (5) du seau.

10. Seau selon l'une des revendications précédentes, **caractérisé en ce que** la bague de serrage (12) est conformée en composant séparé.

11. Seau selon l'une des revendications, **caractérisé en ce que** la bague de serrage (12) est conformée d'une seule pièce sur le couvercle (2) ou le seau (1) par le biais d'une liaison à rupture (10), notamment une charnière à film.

12. Seau selon l'une des revendications, **caractérisé en ce que** la bague de serrage (12) est une bague conformée de façon à s'étendre sur toute la périphérie.
